(19) **Europäisches Patentamt**

**European Patent Office**

**Office européen des brevets**

(11) **EP 1 684 084 A1**

(12) **EUROPÄISCHE PATENTANMELDUNG**

(43) Veröffentlichungstag:
26.07.2006 Patentblatt 2006/30

(51) Int Cl.:
*G01S 5/02* (2006.01)   *G01S 3/48* (2006.01)

(21) Anmeldenummer: 05001286.3

(22) Anmeldetag: 22.01.2005

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(71) Anmelder: **Leica Geosystems AG**
**9435 Heerbrugg (CH)**

(72) Erfinder:
• **Euler, Hans-Jürgen, Dr.-Ing.**
**9435 Heerbrugg (CH)**

• **Hill, Craig, D., Dr.**
**9436 Balgach (CH)**

(74) Vertreter: **Harmann, Bernd-Günther**
**Büchel, Kaminski & Partner**
**Patentanwälte Est.**
**Austrasse 79**
**9490 Vaduz (LI)**

(54) **Verfahren zur Bestimmung der Orientierung einer Antennenanordnung**

(57)   Zur Einschränkung der Zahl der möglichen Lösungen der Phasenmehrdeutigkeit bei Messungen mit satellitengestützten Positionierungssystemen wird ein Verfahren bereitgestellt, welches eine verbesserte Einschränkung des Suchraums ermöglicht. Hierfür werden für eine Antennenanordnung Kenntnisse über deren Geometrie zur Aufstellung von Restriktionen verwendet. Durch diese Restriktionen wird der Suchraum und damit die Zahl zulässiger Lösungen sukzessive verringert. Eine Restriktion besteht in der Nutzung der Verbindungslinie zwischen zwei Antennen (A0, A1), welche eine primäre Basislinie (S01) definieren. Durch eine erfindungsgemässe Parametrisierung des rotatorischen Freiheitsgrades einer weiteren, sekundären Basislinie (S0x) um die primäre Basislinie (S01) kann eine effiziente Berechnung dieser sekundären Basislinie (S0x) erreicht werden, so dass eine Beschleunigung des Verfahrens realisierbar wird.

*Fig. 6*

EP 1 684 084 A1

**Beschreibung**

Die Erfindung betrifft ein Verfahren zur Bestimmung der Orientierung einer Antennenanordnung für ein satellitengestütztes Positionierungssystem nach dem Oberbegriff des Anspruchs 1 sowie ein Computerprogrammprodukt nach Anspruch 11.

Bei der Bestimmung von Positionen bzw. Orientierungen mittels satellitengestützter Positionierungssysteme werden durch Antennen bzw. Empfänger Signale von Satelliten empfangen, aus denen die Position der Antenne bestimmt werden kann. Wird diese Antenne beispielsweise an einem Fahrzeug angebracht, so kann die Position dieses Fahrzeugs bestimmt werden. Durch die Verwendung mehrer Antennen können deren Positionen und damit weitere Informationen über die Orientierung des Fahrzeugs erhalten werden. Durch die Verwendung von mindestens 3 fahrzeugfesten Antennen mit einer bekannten geometrischen Anordnung ist es schliesslich grundsätzlich möglich, die dreidimensionale Orientierung des Fahrzeugs abzuleiten, sofern die Antennen nicht linear angeordnet sind und wobei die Verbindungslinie zwischen zwei Antennen jeweils eine Basislinie definiert. Allerdings werden zumeist Anordnungen mit 4 Antennen eingesetzt, da die zusätzliche Antenne Redundanz und weitere Sicherheit in das System einbringt. Um eine hinreichend präzise Positionsbestimmung im Bereich der Trägerwellenlänge des empfangenen Signals durchzuführen, müssen Phasenmehrdeutigkeiten aufgelöst werden, da von den Antennen nur eine Verschiebung der Phasen detektiert wird. Die Auflösung dieser Phasenmehrdeutigkeit kann durch die Verwendung weiterer Antennen verbessert bzw. beschleunigt werden.

Da im Regelfall mindestens 3 Antennen Signale von mindestens 4 Satelliten empfangen werden, resultiert ein kombinatorisches Problem. Zur Lösung von kombinatorischen Problemen werden allgemein Verfahren eingesetzt, die aus der Gesamtzahl der zulässigen Lösungen, z.B. mittels Least-Square-Fit oder statistischer Verfahren, die optimale Lösung auswählen. Da jedoch die Gesamtzahl der zu untersuchenden Lösungen im Regelfall sehr gross ist und, insbesondere bei dynamischen Anwendungen, die Lösung solcher kombinatorischer Probleme sehr rechenintensiv ist, besteht ein Bedürfnis, die verwendeten Algorithmen effizient zu gestalten. Somit besteht ein Interesse daran, die Gesamtzahl der zu untersuchenden Lösungen unter Nutzung von verfügbaren Informationen als Nebenbedingungen bzw. Restriktionen einzuschränken, so dass aus einer Menge von möglichen Lösungen sukzessive Kandidaten eliminiert werden, bis die verbleibende Lösung die Position bzw. die Orientierung bestimmt.

Eine geeignete Möglichkeit zur Einschränkung der Gesamtzahl zu untersuchender Kandidaten ist die Ableitung von Restriktionen aus a priori bekannten Informationen, wie z.B. der bekannten geometrischen Anordnung der Antennen, oder aus Plausibilitätsannahmen, wie z.B. einer Höchstgrenze für die Neigung eines Fahrzeugs gegenüber der Horizontalen.

Verfahren zur Auflösung der Phasenmehrdeutigkeit werden beispielsweise aus Euler, H.-J. "GPS Attitude Determination: Utilizing Auxiliary Information to obtain Improved Results", 3rd. Int. Workshop, "High Precision Navigation", 3.-5. April 1995, Stuttgart und Euler, H.-J., Hill, Craig D., "Attitude Determination: Exploiting all Information for Optimal Ambiguity Resolution" ION GPS 95, 12.-15. September 1995, Palm Springs, Kalifornien, beschrieben.

In diesen Veröffentlichungen werden topozentrische, d.h. lokale Koordinatensysteme zur optimalen Ausnutzung von bekannten Informationen verwendet. In die Auswertung bzw. Einschränkung des Lösungsraums wird die Geometrie zwischen jeweils zwei Antennen, insbesondere deren Abstand und Höhenunterschied, einbezogen, allerdings bleibt die Berechnung der Orientierung einer Basislinie im Raum aufwendig.

Ein geeigneter Ansatz zur sukzessiven Einschränkung des Lösungsraumes ist beispielsweise aus Hill, Craig D., Euler, H.-J. "Optimal Ambiguity Resolution Technique for Attitude Determination" Proceedings of the 1996 IEEE Position Location and Navigation Symposium, PLANS, Atlanta, GA, USA, Seiten 262-269, bekannt.

Ein herkömmliches Basislinienverfahren beruht auf dem folgenden System von linearisierten Gleichungen für einfache Differenzen

$$
\begin{aligned}
\Delta\phi_{12}^1 &= dt + \left(x_1^1 dx_1 + x_2^1 dx_2 + x_3^1 dx_3\right)/\lambda + N^1 \\
\Delta\phi_{12}^2 &= dt + \left(x_1 dx_1 + x_2^1 dx_2 + x_3^1 dx_3\right)/\lambda + N^2 \\
\Delta\phi_{12}^3 &= dt + \left(x_1^3 dx_1 + x_2^3 dx_2 + x_3^3 dx_3\right)/\lambda + N^3 \qquad (1) \\
\Delta\phi_{12}^4 &= dt + \left(x_1^4 dx_1 + x_2^4 dx_2 + x_3^4 dx_3\right)/\lambda + N^4
\end{aligned}
$$

wobei

$\Delta\phi_{12}^i$     die beobachtete Einfachdifferenz der Stationen 1 und 2 zum Satelliten i,

$dt$     die Empfängeruhrdifferenz,

$x_j^i$     j-te Komponente des zum Satelliten i weisenden Einheitsvektors,

$\lambda$     Wellenlänge der Trägerphase,

$dx_j$     j-te Komponente des unbekannten Positionsvektors der zweiten Antenne und

$N^i$     die dem Satelliten i zugeordnete ganzzahlige Phasenmehrdeutigkeit der Einfachdifferenz bezeichnen.

Dieses System aus 4 Gleichungen liefert, sofern die Phasenmehrdeutigkeit aufgelöst bzw. bestimmt wird, die relativen Positionen der Phasenzentren der beiden Antennen. Die jeweiligen Koordinaten können nachfolgend in die Ausrichtung der Basislinie transformiert werden, so dass über die Orientierung der Antennenanordnung auch die Orientierung eines damit verbundenen Körpers abgeleitet werden kann. Jede ganzzahlige Phasenmehrdeutigkeit, die eine Lösung für die relativen Koordinaten liefert, welche innerhalb einer Kugel mit dem Radius der Basislänge liegt, ist ein Kandidat für das richtige Ergebnis. Zusätzlich soll die Kombination die - bekannte - Länge der Basislänge mit einer nur minimalen Abweichung reproduzieren.

Stehen hinreichende Messungen zur Verfügung, können die Phasenmehrdeutigkeiten gelöst werden, z.B. durch die Methode der kleinsten Fehlerquadrate oder Verfahren der ganzzahligen bzw. gemischt-ganzzahligen Optimierung.

Ein Ansatz zur sukzessiven Einschränkung des Lösungsraumes durch Eliminierung von Kandidaten basiert auf der schon erwähnten Nutzung von Informationen über die Geometrie der Antennenanordnung.

In einem topozentrischen Bezugssystem kann der Vektor der Basislinie gemäss

$$\vec{b} = (e;n;u)$$
$$b = \sqrt{e^2 + n^2 + u^2}$$

(2)

beschrieben werden, wobei e,n,u jeweils die Ost-, Nord- und Höhenkomponente der Basislinie bezeichnen.

Allgemein kann die Beobachtungsgleichung der Einzeldifferenz für die Basislinie zwischen den Antennen #1 und #2 wie folgt angegeben werden

$$\Delta_{Li}\lambda_{Li}\phi_{01}^{Sn} = e_{01}\frac{e^{Sn}}{\rho_0^{Sn}} + n_{01}\frac{n^{Sn}}{\rho_0^{Sn}} + u_{01}\frac{u^{Sn}}{\rho_0^{Sn}} +_{Li}\lambda_{Li}N_{01}^{Sn} + c_{Li}t_{c_{01}}$$

(3)

wobei

$\Delta_{Li}\lambda_{Li}\phi_{01}^{Sn}$     die Einfachdifferenz einer Trägerphasenmessung für die Frequenz Li, z.B. der Frequenz L1 oder L2 des GPS-Systems, und den Satelliten Sn zwischen den Antennen #0 und #1,

$e_{01},n_{01},u_{01}$     die Ost-, Nord- und Höhenkomponente der Basislinie zwischen den Antennen #0 und #1,

$\frac{e^{Sn}}{\rho_0^{Sn}}, \frac{n^{Sn}}{\rho_0^{Sn}}, \frac{u^{Sn}}{\rho_0^{Sn}}$     die topozentrischen Einheitsvektoren zum Satelliten Sn,

$_{Li}\lambda$     die Wellenlänge der Frequenz Li,

$_{Li}N_{01}^{Sn}$     die Trägerphasenmehrdeutigkeit der Einfachdifferenz für den Satelliten Sn und die Frequenz Li,

$c$     die Vakuumlichtgeschwindigkeit und

$_{Li}t_{c01}$     die Zeitdifferenz der Empfängeruhren für die Frequenz Li und die Basislinie zwischen den Antennen #0 und #1 bezeichnen.

Mit einer hinreichenden Zahl von Messungen zu Satelliten, z.B. zu vier in günstiger Anordnung stehenden Satelliten, und einer Auswahl von geeigneten Werten für die Phasenmehrdeutigkeit können die Ost-, Nord- und Höhenkomponente der Basislinie berechnet werden.

Zur Einschränkung des Lösungsraums können nun die Informationen über die Geometrie der Antennenanordnung oder aber Plausibilitätsannahmen genutzt werden. Beispielsweise ist die Länge der Basislinie bekannt und es kann die maximale Neigung eines Fahrzeugs und damit der damit verbundenen Antennenanordnung beschränkt werden.

Die Höhenkomponente genügt damit der Ungleichung

$$u = \sqrt{b^2 - e^2 - n^2} \le b \cdot \sin(\gamma_{max}) \qquad (4)$$

so dass die horizontale Komponente der Basislinie gemäss

$$b \ge \sqrt{e^2 + n^2} \ge b \cdot \cos(\gamma_{max}) \qquad (5)$$

folgt, wobei $\gamma_{max}$ den maximal zulässigen Neigungswinkel gegenüber der Horizontalen bezeichnet. Für einen Beispielwert von 15° folgt dann

$$u = \sqrt{b^2 - e^2 - n^2} \le b \cdot \sin(15°) \approx b \cdot 0{,}2588$$

$$b \ge \sqrt{e^2 + n^2} \ge b \cdot \cos(15°) \approx b \cdot 0{,}9659$$

Durch diese Längen- und Neigungsrestriktionen können Kandidaten für Basislinien ausgeschlossen werden, welche die maximal zulässige Neigung überschreiten und so die Anzahl der möglichen Kandidaten für die korrekte Lösung reduziert werden. Ein anderes Beispiel für eine Restriktion stellt die Berechnung von Varianzen aus Messungen zu mehr als vier Satelliten oder für mehrere Trägerfrequenzen dar. Überschreitet der Wert eines Kandidaten den entsprechenden Bereich der Varianz, so erfolgt eine Eliminierung.

Da die Bestimmung nur einer Basislinie einen Freiheitsgrad unbestimmt lässt, muss im Regelfall stets eine zweite bzw. sekundäre Basislinie, z.B. zwischen den Antennen #0 und #2, bestimmt werden, die auch den rotatorischen Freiheitsgrad bzgl. der ersten bzw. primären Basislinie festlegt.

Ein möglicher Ansatz besteht nun darin, zuerst primäre Basislinien zu berechnen, welche eine erste Menge von Kandidaten darstellen, mit deren Hilfe eine Auflösung der Phasenmehrdeutigkeit erfolgen kann. Aus dieser Menge werden in einem ersten Schritt durch Restriktionen Kandidaten eliminiert. Gegebenenfalls kann auch bereits während der Berechnung dieser Kandidaten für die primären Basislinien eine Berücksichtigung der Restriktionen erfolgen, so dass die Menge nur aus bereits vorselektierten Kandidaten gebildet wird.

Für die nicht eliminierten Kandidaten werden nun Lösungen für zugehörige sekundäre Basislinien berechnet, die eine zweite, den Kandidaten der ersten Menge zugeordnete zweite Menge bilden. Hierbei sind diese Lösungen für die primäre und sekundäre Basislinien durch eine gemeinsame Antenne (z.B. die Antenne #0 für die Basislinien #0-#1 und #0-#2) verbunden und damit zugeordnet. Grundsätzlich können jedoch auch Basislinien mit zwei getrennten Antennenpaaren berechnet werden. Die Zuordnung erfolgt dann durch die Kenntnis der Geometrie der Antennenanordnung.

Für die berechneten Lösungen der sekundären Basislinien erfolgt wiederum eine Eliminierung anhand der für diese gültigen Restriktionen. Werden für einen Kandidaten einer primären Basislinie alle zugehörigen Lösungen für sekundäre Basislinien eliminiert, kann auch der Kandidat für die erste Basislinie aus der ersten Menge entfernt werden.

Zur Bestimmung der korrekten Phasenmehrdeutigkeiten müssen damit Lösungen für diese Basislinien in grösserer Anzahl bestimmt werden, bevor eine Eliminierung erfolgen kann. Eine Erzeugung dieser Lösungen erfordert jedoch einen Rechenaufwand, der die Schnelligkeit der Auflösung der Phasenmehrdeutigkeit und damit der Bestimmung der Orientierung beeinflusst.

Eine Aufgabe der Erfindung besteht darin, ein Verfahren bereitzustellen, das eine verbesserte Berechnung von Lösungen einander zugeordneter Basislinien ermöglicht.

Eine weitere Aufgabe besteht darin, eine schnellere Auflösung der Phasenmehrdeutigkeit zu ermöglichen.

Die Ermöglichung einer erhöhten Komplexität der Auflösung der Phasenmehrdeutigkeit bzw. der verbesserten Genauigkeit bei gleichbleibender Schnelligkeit stellt eine weitere Aufgabe dar.

Diese Aufgaben werden erfindungsgemäss durch die Merkmale des Anspruchs 1 oder durch die Merkmale der Unteransprüche gelöst bzw. die Lösungen fortgebildet.

Die vorliegende Erfindung betrifft ein Verfahren zur Bestimmung der Orientierung einer Antennenanordnung für ein satellitengestütztes Positionierungssystem bei dem eine verbesserte Berechnung von Lösungen sekundärer Basislinien erfolgt.

In den Verfahren des Stands der Technik werden Lösungen für Basislinien voneinander unabhängig bestimmt und danach anhand von Restriktionen eliminiert. Eine geeignete Restriktion stellt der aus der Geometrie der Antennenanordnung bekannte Winkel zwischen den Basislinien dar. Paare von Basislinien, die dieser Restriktion nicht genügen, werden aus der Menge möglicher Lösungen eliminiert. Für diesen Ansatz müssen jedoch alle Lösungen für Basislinien unabhängig voneinander generiert und danach in Beziehung gesetzt werden.

Aufgrund der bekannten Geometrie der Antennenanordnung können jedoch die primäre Basislinie und weitere Basislinien miteinander in Beziehung gesetzt werden. Insbesondere ist es möglich, den rotatorischen Freiheitsgrad der relativen Lage von primärer Basislinie zu sekundärer Basislinie durch einen Winkel zu parametrisieren. Damit wird diese relative Lage durch einen einzigen unbekannten Parameter beschrieben, wobei die Längen sowie der Öffnungswinkel der beiden Basislinien bekannt sind.

Die Ost-, Nord- und Höhenkomponente der sekundären Basislinie zwischen den Antennen #0 und #2 sind dann wie folgt gegeben

$$e_{02} = \left( \cos\beta \frac{n_{01}}{\sqrt{(e_{01}^2 + n_{01}^2)}} - \sin\beta \frac{u_{01}}{s_{01}} \frac{e_{01}}{\sqrt{(e_{01}^2 + n_{01}^2)}} \right) s_{02} \sin\alpha_{012} + \frac{e_{01}}{s_{01}} s_{02} \cos\alpha_{012}$$

$$n_{02} = \left( -\cos\beta \frac{e_{01}}{\sqrt{(e_{01}^2 + n_{01}^2)}} - \sin\beta \frac{u_{01}}{s_{01}} \frac{n_{01}}{\sqrt{(e_{01}^2 + n_{01}^2)}} \right) s_{02} \sin\alpha_{012} + \frac{n_{01}}{s_{01}} s_{02} \cos\alpha_{012} \quad (6)$$

$$u_{02} = \left( \sin\beta \frac{\sqrt{(e_{01}^2 + n_{01}^2)}}{s_{01}} \right) s_{02} \sin\alpha_{012} + \frac{u_{01}}{s_{01}} s_{02} \cos\alpha_{012}$$

wobei

$e_{01}, n_{01}, u_{01}$    die Ost-, Nord- und Höhenkomponente der primären Basislinie zwischen den Antennen #0 und #1,

$e_{02}, n_{02}, u_{02}$    die Ost-, Nord- und Höhenkomponente der sekundären Basislinie zwischen den Antennen #0 und #2,

$\beta$    den Winkel zur Parametrisierung des rotatorischen Freiheitsgrades und

$\alpha_{012}$    den Winkel zwischen primärer und sekundärer Basislinie bezeichnen.

Für den unbekannten Winkel $\beta$ wird ein Bereich festgelegt, innerhalb dessen für jeden Kandidaten die Lösungen für die zugehörigen sekundären Basislinien generiert werden. Die Suche in dem Winkel $\beta$ zugeordneten Raum ist vorteilhafter als eine Suche im Raum der Lösungen von Phasenmehrdeutigkeiten, da eine deutlich geringere Zahl von Lösungen analysiert werden muss. Beispielsweise erfordert ein Suchfenster von $\pm$ n Perioden die Berechnung und Analyse von $(2n+1)^3$ Lösungen, was für $\pm$ 15 Perioden immerhin 29791 Basislinien bedeutet. Im Vergleich dazu erfordert die Suche im Winkelraum die Berechnung von $(2n+1)$ Basislinien und damit für einen Bereich von $\pm$ 15° mit einer Teilung mit 0,5°-Schritten die Erzeugung von nur 61 Lösungen.

Damit besitzt das erfindungsmässe Verfahren durch die Verknüpfung der möglichen Orientierung der primären Basislinie mit der sekundären Basislinie Vorteile gegenüber Verfahren des Stands der Technik, bei denen die Basislinien unabhängig voneinander ermittelt werden. Erleichtert wird diese Verknüpfung durch eine Formulierung der Basislinien in einem topozentrischen Bezugssystem, das eine einfache Ausnutzung der bekannten geometrischen Verhältnisse der Antennenanordnung erlaubt.

Dabei ist die erfindungsgemässe Erzeugung von Lösungen der sekundären Basislinien nicht auf die oben beschriebene Folge von Verfahrensschritten eingeschränkt. Insbesondere können Eliminierungsschritte auch in anderer Reihenfolge erfolgen. So ist beispielsweise die Reihenfolge der Einführung von Restriktionen variabel gestaltbar. Eine Einschränkung des Suchraums durch Eliminierung von Kandidaten auf der Basis von sekundären Basislinien kann daher grundsätzlich auch vor einer Nutzung z.B. der Neigungsrestriktion für die Kandidaten der primären Basislinien erfolgen. Allerdings wird die Reihenfolge zumeist durch die Effizienz des Eliminierungsvorganges bzgl. des Rechenaufwands weitgehend vorgegeben werden.

Das erfindungsgemässe Verfahren wird nachfolgend anhand von Zeichnungen schematisch dargestellt und rein beispielhaft näher beschrieben. Im einzelnen zeigen

Fig.1    ein Beispiel für eine Antennenanordnung mit 4 Antennen;

Fig.2    die schematische Darstellung der Basislinien für die Antennenanordnung mit 4 Antennen;

Fig.3-5    die schematische Darstellung der Einschränkung eines Suchraums und

Fig.6    die schematische Darstellung geometrischen Verhältnisse zwischen primärer und sekundärer Basislinie.

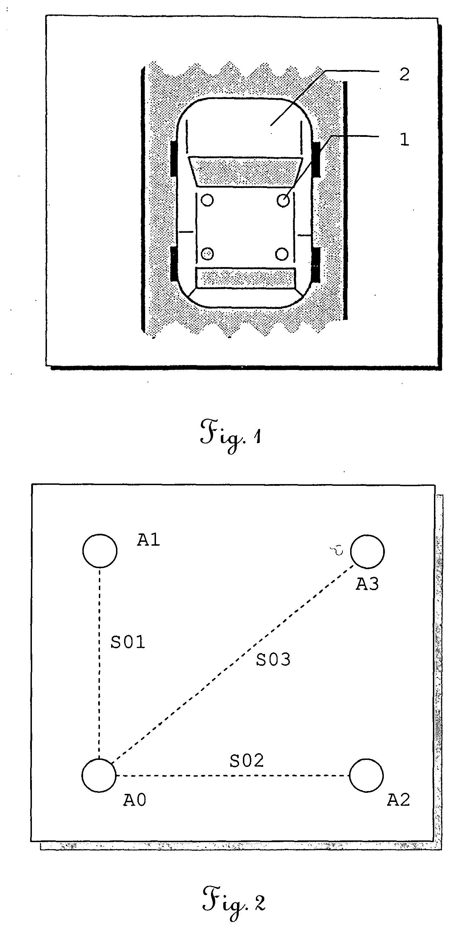

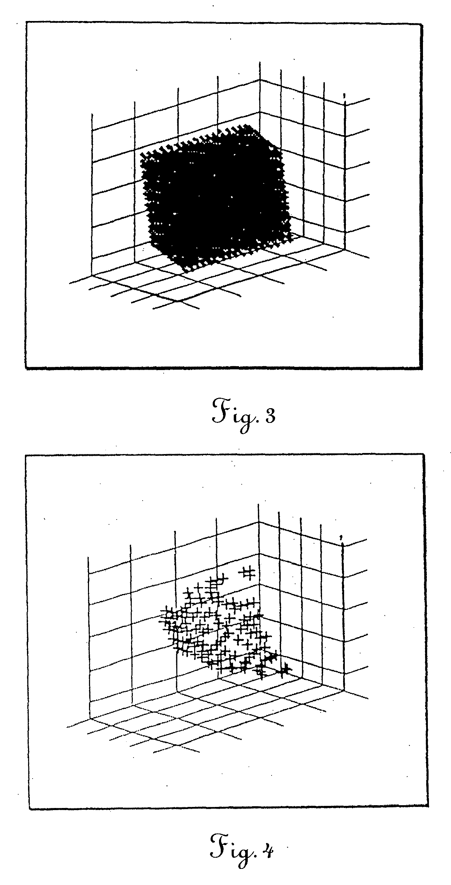

In Fig.1 wird schematisch der Aufbau einer Antennenanordnung mit vier Antennen 1 für ein satellitengestütztes Positionierungssystem auf einem Fahrzeug 2 dargestellt. In diesem Beispiel erfolgt die Anbringung auf dem Dach des Fahrzeugs 2. Aufgrund der festen Zuordnung von Antennen 1 und Fahrzeug 2 kann aus der Orientierung der Antennenanordnung auf die Orientierung des Fahrzeugs 2 geschlossen werden.

Fig.2 zeigt die geometrischen Verhältnisse zwischen vier Antennen A0, A1, A2 und A3 einer Antennenanordnung sowie die hierdurch definierten Basislinien. Wird als primäre Basislinie S01 die Verbindungslinie zwischen den Antennen A0 und A1 gewählt, so definieren die Verbindungslinien zwischen den Antennen A0 und A2 sowie A0 und A3 die sekundären Basislinien S02 und S03.

Fig.3-5 erläutern die sukzessive Einschränkung des Suchraums für zulässige Lösungen.

Fig.3 stellt den noch nicht restringierten Suchraum für isolierte Lösungen der Phasenmehrdeutigkeiten dar. Die Lösungen sind um eine approximierte Position für eine Lösung der Pseudoentfernung zu den Satelliten eines satellitengestützten Positionierungssystems lokalisiert, wobei der Abstand der Seitenteilung des Raumes jeweils 2 Meter beträgt. Durch die Kreuze werden unterschiedliche Kombinationen für die Phasenmehrdeutigkeit bezeichnet, die damit zu analysierende Kandidaten darstellen. In diesem Beispiel beinhaltet der Suchraum in Fig.3 zulässige 4913 Lösungen.

Durch die Kenntnis der Distanz zwischen zwei Antennen wird eine primäre Basislinie definiert und eine Restriktion festgelegt, die als einzuhaltende Nebenbedingung den Raum der zulässigen Lösungen verringert. Dieser beinhaltet nach der Nutzung dieser Information, wie in Fig.4 dargestellt, immer noch 117 potentielle Kandidaten.

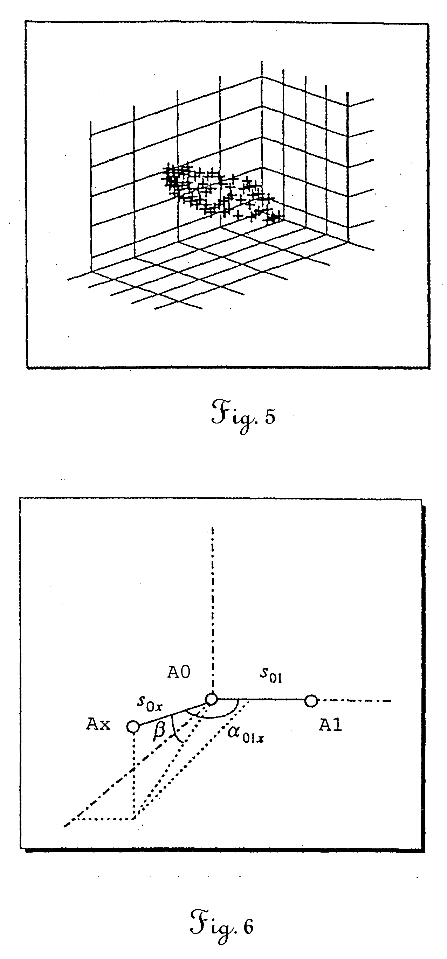

Die Einführung einer weiteren Restriktion führt zu der in Fig.5 abgebildeten Einschränkung des Raums der zulässigen Lösungen. Durch die Festlegung der maximalen Neigung gegenüber der Horizontalen wird die Zahl der Kandidaten in diesem Beispiel auf 66 reduziert. Um diese Zahl noch weiter zu reduzieren, müssen weitere Restriktionen hinzugefügt werden. Eine Möglichkeit stellt die Berücksichtigung weiterer, sekundärer Basislinien dar.

Ein erfindungsgemässes Modell zur Berechnung dieser sekundären Basislinien in Verknüpfung mit der primären Basislinie wird in Fig.6 dargestellt. Durch die Antennen A0 und A1 werden die Endpunkte der primären Basislinie S01 und durch die Antennen A0 und Ax werden die Endpunkte der sekundären Basislinie S0x festgelegt. Aus der Kenntnis der Geometrie der Antennenanordnung kann der Geometriewinkel $\alpha_{01x}$ zwischen dieser primären Basislinie S01 und der sekundären Basislinie S0x abgeleitet werden. Es verbleibt als Freiheitsgrad die Rotation um die als Achse fungierende primäre Basislinie S01. Diese Rotation wird durch den Winkel $\beta$ parametrisiert. Die sekundären Basislinien S0x werden nun erfindungsgemäss durch Variation des Winkels in diskreten Schritten berechnet, wobei die zur Festlegung der beiden Basislinien gleichermassen genutzte Antenne A0 einen gemeinsamen Punkt bildet. Durch diesen gemeinsamen Punkt und die Kenntnis des Geometriewinkels $\alpha_{01x}$ werden die beiden Basislinien miteinander in Bezug gesetzt. Für die generierten sekundären Basislinien S0x werden wiederum Restriktionen abgeleitet, durch die eine Eliminierung von Lösungen erfolgt, so dass der Suchraum weiter eingeschränkt wird.

Die dargestellten Ausführungsformen stellen nur Beispiele für mögliche Antennenanordnungen dar und sind daher nicht abschliessend und einschränkend zu verstehen. Darüber hinaus kann der Fachmann weitere für ein erfindungsgemässes Verfahren geeignete Antennenanordnungen ableiten, z.B. durch Anordnung in mehreren Ebenen oder in anderen geometrischen Formen. Auch können die Verfahrensschritte kombiniert bzw. integriert werden, so dass die Reihenfolge der Einschränkung des Suchraums in anderer Weise erfolgt.

**Patentansprüche**

1. Verfahren zur Bestimmung der Orientierung einer Antennenanordnung mit wenigstens 3 Antennen (1,A0,A1,A2,A3) zum Empfang von Signalen eines satellitengestützten Positionierungssystems, wobei

• die Geometrie der Antennenanordnung bekannt ist, vorzugsweise durch eine vorab erfolgende Vermessung,
• die Verbindungslinie zwischen einer ersten Antenne (A0) und einer zweiten Antenne (A1) eine primäre Basislinie (S01) definiert und
• die Verbindungslinie zwischen der ersten Antenne (A0) und einer weiteren Antenne (Ax) eine sekundäre Basislinie (SOx) definiert,

mit einem Auflösen einer Phasenmehrdeutigkeit für die Signale,
wobei für die primäre Basislinie Kandidaten zum Auflösen der Phasenmehrdeutigkeit berechnet und den Kandidaten jeweils Lösungen für die sekundäre Basislinie (S0x) zugeordnet werden,
**dadurch gekennzeichnet, dass**
beim Erzeugen der Lösungen der rotatorische Freiheitsgrad der relativen Lage von primärer Basislinie (S01) zu sekundärer Basislinie (S0x) durch einen einzigen Parameter, insbesondere einen Winkel ($\beta$), parametrisiert wird.

2. Verfahren nach Anspruch 1,
**dadurch gekennzeichnet, dass**
das Auflösen der Phasenmehrdeutigkeit folgende Schritte aufweist

- Berechnen einer ersten Menge der Kandidaten zum Auflösen einer Phasenmehrdeutigkeit für die primäre Basislinie (S01),
- Eliminieren der Kandidaten, die wenigstens einer ersten Restriktion nicht genügen, aus der ersten Menge,
- Erzeugen einer zugeordneten Menge von Lösungen,
- Eliminieren der Lösungen, die wenigstens einer zweiten Restriktion nicht genügen, aus der zugeordneten Menge,
- Entfernen der Kandidaten, deren zugeordnete Menge kein Lösung enthält, aus der ersten Menge,
- Ableiten der Orientierung der Antennenanordnung aus der ersten Menge und der zugeordneten Menge.

3. Verfahren nach Anspruch 1 oder 2,
**dadurch gekennzeichnet, dass**
die relative Lage von primärer Basislinie (S01) zu sekundärer Basislinie (SOx) durch folgendes Gleichungssystem beschrieben wird

$$e_{0x} = \left( \cos\beta \frac{n_{01}}{\sqrt{(e_{01}^2 + n_{01}^2)}} - \sin\beta \frac{u_{01}}{s_{01}} \frac{e_{01}}{\sqrt{(e_{01}^2 + n_{01}^2)}} \right) s_{0x} \sin\alpha_{01x} + \frac{e_{01}}{s_{01}} s_{0x} \cos\alpha_{01x}$$

$$n_{0x} = \left( -\cos\beta \frac{e_{01}}{\sqrt{(e_{01}^2 + n_{01}^2)}} - \sin\beta \frac{u_{01}}{s_{01}} \frac{n_{01}}{\sqrt{(e_{01}^2 + n_{01}^2)}} \right) s_{0x} \sin\alpha_{01x} + \frac{n_{01}}{s_{01}} s_{0x} \cos\alpha_{01x}$$

$$u_{0x} = \left( \sin\beta \frac{\sqrt{(e_{01}^2 + n_{01}^2)}}{s_{01}} \right) s_{0x} \sin\alpha_{01x} + \frac{u_{01}}{s_{01}} s_{0x} \cos\alpha_{01x}$$

wobei

$e_{01}, n_{01}, u_{01}$ die Ost-, Nord- und Höhenkomponente der primären Basislinie (S01),
$e_{0x}, n_{0x}, u_{0x}$ die Ost-, Nord- und Höhenkomponente der sekundären Basislinie (S0x),
$\beta$ den Winkel zur Parametrisierung des rotatorischen Freiheitsgrades und
$\alpha_{01x}$ den Winkel zwischen primärer Basislinie (S01) und sekundärer Basislinie (SOx) bezeichnen.

4. Verfahren nach einem der vorangehenden Ansprüche,
**dadurch gekennzeichnet, dass**

beim Erzeugen einer zugeordneten Menge der zulässige Wertebereich des Winkels (β) beschränkt wird, insbesondere auf den Bereich von maximal ± 15° gegenüber der Horizontalen.

**5.** Verfahren nach einem der vorangehenden Ansprüche,
**dadurch gekennzeichnet, dass**
beim Erzeugen einer zugeordneten Menge die Lösungen für diskrete Werte des Winkels (β), insbesondere inkrementell, generiert werden.

**6.** Verfahren nach Anspruch 5,
**dadurch gekennzeichnet, dass**
die diskreten Werte des Winkels (β) einen Abstand von 0,5° aufweisen.

**7.** Verfahren nach einem der vorangehenden Ansprüche,
**dadurch gekennzeichnet, dass**
beim Eliminieren von Lösungen als zweite Restriktion der Wertebereich des Winkels (β) beschränkt wird.

**8.** Verfahren nach einem der vorangehenden Ansprüche,
**dadurch gekennzeichnet, dass**
als erste Restriktion wenigstens eine der folgenden Grössen gewählt wird

  - Länge der primären Basislinie (S01),
  - Neigungswinkel der primären Basislinie (S01) gegenüber der Horizontalen.

**9.** Verfahren nach einem der vorangehenden Ansprüche,
**dadurch gekennzeichnet, dass**
die Länge der sekundären Basislinie (S0x) als zweite Restriktion gewählt wird.

**10.** Verfahren nach einem der vorangehenden Ansprüche,
**dadurch gekennzeichnet, dass**
beim Erzeugen einer zugeordneten Menge von Lösungen für die sekundäre Basislinie (SOx) eine Prüfung erfolgt, ob eine sekundäre Basislinie (SOx) bereits in der zugeordneten Menge enthalten ist.

**11.** Computerprogrammprodukt als Aufzeichnung auf einem Datenträger oder in Form eines Datensignals zur Durchführung des Verfahrens nach einem der Ansprüche 1 bis 10.

Fig. 1

Fig. 2

Fig. 3

Fig. 4

*Fig. 5*

*Fig. 6*

**Europäisches Patentamt**

## EUROPÄISCHER RECHERCHENBERICHT

**Nummer der Anmeldung**

EP 05 00 1286

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | HILL C D ET AL: "An optimal ambiguity resolution technique for attitude determination" POSITION LOCATION AND NAVIGATION SYMPOSIUM, 1996., IEEE 1996 ATLANTA, GA, USA 22-26 APRIL 1996, NEW YORK, NY, USA,IEEE, US, 22. April 1996 (1996-04-22), Seiten 262-269, XP010163386 ISBN: 0-7803-3085-4 * das ganze Dokument * ----- | 1-11 | G01S5/02 G01S3/48 |
| X | US 5 561 432 A (KNIGHT ET AL) 1. Oktober 1996 (1996-10-01) * Spalte 4, Zeilen 28-45; Abbildungen 4-7 * * Spalte 20, Zeile 18 - Spalte 22, Zeile 38 * * Spalte 49, Zeile 1 - Spalte 50, Zeile 22; Anspruch 1 * ----- | 1-11 | |
| A | US 5 296 861 A (KNIGHT ET AL) 22. März 1994 (1994-03-22) * das ganze Dokument * ----- | 1-11 | **RECHERCHIERTE SACHGEBIETE (Int.Cl.7)** G01S |
| A | EP 0 437 372 A (ROCKWELL INTERNATIONAL CORPORATION) 17. Juli 1991 (1991-07-17) * das ganze Dokument * ----- | 1-11 | |
| A | US 5 548 293 A (COHEN ET AL) 20. August 1996 (1996-08-20) * das ganze Dokument * ----- | 1-11 | |
| A | WO 99/23505 A (NAVICOM CO., LTD; PARK, CHAN, SIK) 14. Mai 1999 (1999-05-14) * das ganze Dokument * ----- | 1-11 | |

Der vorliegende Recherchenbericht wurde für alle Patentansprüche erstellt

| Recherchenort | Abschlußdatum der Recherche | Prüfer |
|---|---|---|
| München | 28. Juni 2005 | Schmelz, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 1286

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2005

| Im Recherchenbericht angeführtes Patentdokument | Datum der Veröffentlichung | Mitglied(er) der Patentfamilie | Datum der Veröffentlichung |
|---|---|---|---|
| US 5561432 A | 01-10-1996 | KEINE | |
| US 5296861 A | 22-03-1994 | KEINE | |
| EP 0437372 A | 17-07-1991 | US 5021792 A<br>DE 69112085 D1<br>DE 69112085 T2<br>EP 0437372 A2 | 04-06-1991<br>21-09-1995<br>18-04-1996<br>17-07-1991 |
| US 5548293 A | 20-08-1996 | AU 684273 B2<br>AU 6490694 A<br>BR 9405971 A<br>CA 2158993 A1<br>EP 0690992 A1<br>JP 3492692 B2<br>JP 9502515 T<br>WO 9422032 A1<br>US 5583513 A<br>US RE37256 E1<br>US 5572218 A | 11-12-1997<br>11-10-1994<br>12-12-1995<br>29-09-1994<br>10-01-1996<br>03-02-2004<br>11-03-1997<br>29-09-1994<br>10-12-1996<br>03-07-2001<br>05-11-1996 |
| WO 9923505 A | 14-05-1999 | KR 265465 B1<br>JP 2001508182 T<br>WO 9923505 A1 | 15-09-2000<br>19-06-2001<br>14-05-1999 |

EPO FORM P0461

Für nähere Einzelheiten zu diesem Anhang : siehe Amtsblatt des Europäischen Patentamts, Nr.12/82